# EUROPÄISCHE PATENTSCHRIFT

(11) **EP 1 924 920 B1**
(45) Veröffentlichungstag und Bekanntmachung des Hinweises auf die Patenterteilung: **05.05.2010**
(21) Anmeldenummer: 06805646.4
(22) Anmeldetag: 01.09.2006
(51) Int. Cl.: G06F 13/40, G06F 21/00

(54) **TRANSPORTIERBARER, KONFIGURIERBARER INFORMATIONSTRÄGER ZUM DATENAUSTAUSCH ZWISCHEN ELEKTRISCHEN GERÄTEN UND VERFAHREN HIERZU**
TRANSPORTABLE, CONFIGURABLE DATA CARRIER FOR EXCHANGING DATA BETWEEN ELECTRICAL DEVICES, AND METHOD THEREFOR
SUPPORTS D'INFORMATION TRANSPORTABLES ET CONFIGURABLES POUR L'ECHANGE DE DONNEES ENTRE DES APPAREILS ELECTRIQUES, ET PROCEDE CORRESPONDANT

(30) Priorität: 16.09.2005 DE 102005044483
(43) Veröffentlichungstag der Anmeldung: 28.05.2008
(73) Patentinhaber: Elektronic Thoma GmbH, 91599 Dentlein (DE)
(72) Erfinder: BECKER, Joachim, 07747 Jena (DE); KRAFT, Gerald, 90768 Fürth (DE); THOMA, Heinrich, 91599 Dentlein (DE)
(74) Vertreter: Dreykorn-Lindner, Werner
(86) Internationale Anmeldenummer: PCT/EP2006/008561
(87) Internationale Veröffentlichungsnummer: WO 2007/033756

(56) Entgegenhaltungen:
- WO-A-00/42491

## Beschreibung

Die Erfindung betrifft gemäß Patentanspruch 1 einen transportierbaren Informationsträgerzum Datenaustausch zwischen elektrischen Geräten und gemäß Patentanspruch 5 ein Verfahren hierzu.

Transportierbare Informationsträger mit einem Steuereinrichtung und einem programmierbaren Festwertspeicher für die Speicherung und Verarbeitung von Informationen sind seit langem bekannt. Derartige Informationsträger werden als Kreditkarten, Bankkarten, Zugangsausweise usw. verwendet. Um einen tragbaren Informationsträger dermaßen weiterzubilden, dass er vielfältig verwendbar und anpassbar ist und eine bessere Sicherheit gegen Manipulation von außen aufweist, ist aus der DE 28 58 818 C2 ein Informationsträger bekannt, bei dem die Steuereinrichtung durch einen Mikroprozessor gebildet ist, der über Adress-/ Daten-Busleitungen mit dem programmierbaren Schreib/Lese-Speicher verbunden ist und bei dem in einer bestimmten Zone des programmierbaren Speichers der Zugriff von außen durch den Mikroprozessor gesperrt und das Auslesen und Einschreiben im Inneren des Informationsträgers freigegeben ist. Im Einzelnen enthält der Mikroprozessor eine Steuereinheit, eine Arithmetikeinheit, Einrichtungen zum Auslesen des programmierbaren Schreib/Lese-Speichers und zum Einschreiben in diesen, und parallele Adress-/ Daten-Busleitungen. Weiterhin ist ein nichtflüchtiger Programmspeicher vorgesehen ist, dessen Inhalt den Betrieb des Mikroprozessors steuert. Die Steuereinheit des Mikroprozessors steuert die serielle Ein/Ausgabe-Schn_ittstelle, die an die parallelen bidirektionalen Adress-/Daten-Busleitungen angeschlossen sind. Die serielle Ein/Ausgabe-Schnittstelle weist eine Torschaltung und Mittel zum Umsetzen der seriellen Information in parallele Information auf und ausgangsseitig ist eine Torschaltung vorgesehen, wobei diese Torschaltungen durch ein Signal gesteuert werden, welches von der Steuereinheit des Mikroprozessors über eine Leitung abgegeben wird. Zum Auslesen aus dem programmierbaren Schreib/Lese-Speicher und zum Einschreiben in diesen sind ein Adressregister und ein Datenregister vorgesehen, die einerseits an den Speicher und andererseits an die Adress-/Daten-Busleitungen angeschlossen sind, und die Adressregister und Datenregister werden durch die Steuereinheit über Steuerleitungen gesteuert. Eine Zone des programmierbaren Schreib/Lese-Speichers weist einen Inhaberschlüssel fest eingespeichert auf und ein Inhaberschlüssel wird von außen eingegeben und mit einem eingespeicherten Inhaberschlüssel verglichen. Weiterhin wird eine Fehlerinformation in den Speicher bei Nichtübereinstimmung eingeschrieben, wobei Mittel zum Einschreiben einer Zugriffsinformation in den programmierbaren Schreib/Lese-Speicher bei Übereinstimmung der Inhaberschlüssel vorgesehen sind. Die Fehlerinformation und die Zugriffsinformation werden in verschiedenen Speicherzonen gespeichert, wobei eine erste Zone gegen jeden Zugriff von außen gesperrt ist, in einer zweiten Zone Schreib- und Leseoperationen sowohl von außen als auch innerhalb des Informationsträgers zugelassen sind und in einer dritten Zone nur Leseoperationen sowohl von außen als auch innerhalb des Informationsträgers zugelassen sind. Durch Eingabe eines geeigneten Programms lässt sich der Mikroprozessor für die jeweils gewünschte Anwendung konfigurierten.

In Weiterbildung hierzu ist, um die Funktionen eines tragbaren Datenverarbeitungsgerät durch einen bidirektionalen Dialog mit den Einrichtungen eines in das Datenverarbeitungsgerät steckbaren Moduls zu erweitern, es aus der DE 31 21 466 C2 bekannt, dass das Modul seinerseits eine Datenverarbeitungseinrichtung mit einem Mikroprozessor und einem Speicher umfasst. Über eine als elektrischen Leiter ausgebildete Kopplungseinrichtung erfolgt der Datenaustausch zwischen den Verarbeitungseinrichtungen des Gerätes und des Moduls bidirektional und seriell. Die Speicher des Geräts und des Moduls enthalten Programme für die Abwicklung des bidirektionalen Datenaustauschs, und weiterhin sind durch die Verarbeitungseinrichtung des Geräts ausführbare Programme im Speicher des Moduls enthalten. Das gesamte Gerät ist in einem Gehäuse aus Metall, Plastik od. dgl. untergebracht, wie es üblicherweise für Taschenrechner verwendet wird. Dieses Gehäuse ist mit einem Schlitz versehen, der die Einführung des steckbaren Moduls in das Gerät ermöglicht. Die Informationen und Daten werden über eine Tastatur eingegeben, die eine unterschiedliche Anzahl von Tasten, beispielsweise Funktionstasten aufweisen kann und das Gerät ist mit einer Anzeigeeinrichtung versehen. Das Gerät und das Modul können beliebig als Daten-Sender und als Daten- Empfänger arbeiten, wobei der jeweilige Daten-Empfänger dem jeweiligen Daten-Sender seinen Erüpfangs-Bereitschaftzustand signalisiert, indem er den Leiter in einen permanenten Zustand versetzt, der durch den Daten-Sender erfassbar ist. Der jeweilige Daten-Empfänger signalisiert dem jeweiligen Daten-Sender, dass er einen Übertragungsfehler festgestellt hat, indem er den Leiter in einen Zustand versetzt, der durch den Daten-Sender erfassbar ist und verschieden von dem Empfangs-Bereitschaftzustand ist. Auf dem Leiter werden Befehle und codierte Informationen zwischen dem jeweiligen Daten-Sender und dem jeweiligen Daten-Empfänger sowie Bestätigungen und codierte Informationen zwischen dem jeweiligen Daten-Empfänger und dem jeweiligen Daten-Sender überlagert. Schließlich ist im Gerät eine Einrichtung vorgesehen, durch welche ein Codewort erfasst und zu dem Modul übertragen werden kann, welches dieses ermächtigt, den Zugriff zu den von dem Gerät angeforderten Daten oder Programmen zuzulassen.

In der Praxis ist der zunehmende Einsatz bei sogenannten digitalen Fahrtenschreibern zu beobachten. Dies ist darauf zurück zu führen, dass ab dem 05. August 2005 in den europäischen Ländern (bis auf Italien und Deutschland), in Umsetzung der EWG-Verordnung 3820/85 vom 20.12.1985 (Verordnung des Rates über das Kontrollgerät im Straßenverkehr, zuletzt geändert am 05.03.2004) keine analogen Fahrtenschreiber (Dokumentierung auf einen personenbezogenen Schaublatt, auf dem in Polarkoordinaten die Geschwindigkeit des Fahrzeugs in Abhängigkeit von der Zeit und die Arbeitszeiten des Fahrers aufgetragen werden) mehr eingebaut werden dürfen. Beispielsweise ist aus der WO 96/31846 A1 ein tragbarer elektronischer Speicher in Form eines Schlüsselanhängers bekannt, welcher eine Steuereinrichtung, eine Speichervorrichtung und eine einzige Schnittstellenschaltung enthält. Der digitale Fahrtenschreiber enthält eine Steuereinrichtung, eine Anzeige- und Ausgabeeinrichtung (LED und Lautsprucher), einen überschreibbaren Datenspeicher (für das Speichern der Kontrolldaten), eine Stromversorgungseinrichtung und eine Schnittstellenschaltung, an welche der tragbare elektronische Speicher angeschlossen werden kann. Die Kontrolldaten, d.h. Fahrtbeginn und Fahrtende, werden auf der Basis von mittels eines Vibrationssensors detektierten Unebenheiten der Fahrbahn erzeugt und im Datenspeicher abgespeichert (bei einem 64k-Speicher und 10 Fahrten/Tag insgesamt 200 Tage). Ist der Datenspeicher fast voll, wird ein Hinweissignal (Tonsignal) erzeugt und eine optional vorhandene Wegfahrsperre aktiviert. Zum Herunterladen der Kontrolldaten vom digitalen Fahrtenschreiber steckt der Bediener den tragbaren elektronischen Speicher am digitalen Fahrtenschreiber auf, die Berechtigung zum Herunterladen wird mittels der Steuereinrichtungen überprüft und danach werden die Kontrolldaten auf einen PC oder Laptop heruntergeladen und der Datenspeicher im digitalen Fahrtenschreiber gelöscht.

In Weiterbildung hierzu ist aus der EP 0 762 339 A2 ein Fahrtenschreiber mit elektronischer Fahrzeug-Betriebsdatenspeicherung und -Verarbeitung bekannt, mit dem eine verbesserte Arbeitszeitüberwachung - insbesondere im Hinblick auf differenzierte Arbeitszeitregelungen - möglich ist. Der Fahrtschreiber enthält hierzu Mittel zur Erfassung von Fahrzuständen eines Fahrzeuges und Gewinnung von Fahrzustandsdaten, eine Echtzeituhr, einer Vorrichtung zur Eingabe von Fahrzeugführerdaten, eine eingangsseitig mit der Echtzeituhr, den Fahrzustands-Erfassungsmitteln und der Eingabevorrichtung für Fahrzeugführerdaten verbundenen ersten Verarbeitungseinheit zur Echtzeitverarbeitung der Fahrzustandssignale zur Gewinnung von Fahrzustandsdaten, einen Vergleichsdatenspeicher zur permanenten Speicherung von für die Fahrzeugführung relevanten Vergleichsdaten, die insbesondere Arbeitszeitnormen repräsentieren, eine jeweils mindestens mittelbar mit dem Ausgang der ersten Verarbeitungseinheit, dem Ausgang des Vergleichsdatenspeichers und der Vorrichtung zur Eingabe von Fahrzeugführerdaten verbundene zweite Verarbeitungseinheit zur vergleichenden und bewertenden Weiterverarbeitung der Fahrzustandsdaten in Zuordnung zu den aktuellen Fahrzeugführerdaten zusammen mit den Vergleichsdaten zur Gewinnung von, insbesondere die Arbeitszeit betreffenden, fahrzeugfizhrerbezogenen Kontrolldaten, einen mit dem Ausgang der zweiten Verarbeitungseinheit verbundenen Kontrolldatenspeicher zur Aufzeichnung der fahrzeugführerbezogenen Kontrolldaten und eine mit dem Ausgang der zweiten Verarbeitungseinheit und/oder dem Kontrolldatenspeicher verbundene Anzeigeeinheit für die Kontrolldaten. Weiterhin ist eine zur Einführung in die Vorrichtung zur Eingabe von Fahrzeugführerdaten und zum Lesen in dieser ausgebildete Fahrerkarte, insbesondere eine Chip- oder Magnetkarte, vorgesehen, welche zur Vereinfachung der Handhabung der Anordnung durch den Fahrer als auch zur Erhöhung der Manipulationssicherheit dient. Zweckmäßig kann etwa auch eine Service-Betechtigungskarte sein, mit der Servicetechniker zu Wartungs- und Einstellzwecken erweiterten Zugriff zum Gerät erhalten. Weiterhin können für Kontrollinstanzen mit unterschiedlichen Befugnissen Berechtigungskarten mit unterschiedlichen Zugriffssteuerfunktionen vorgesehen sein, die insbesondere einen Zugriff auf unterschiedlich weit in die Vergangenheit zurückreichende Daten und ausschließlich auf Kontrolldaten oder zusätzlich auf Fahrzustandsdaten gewähren. Schließlich kann auch eine sogenannte Unternehmerkarte zur Datenentnahme und - speicherung im Betrieb vorgesehen werden. Die Fahrerkarte bzw. die Fahrerkarte des Beifahrers weist einen nicht-flüchtigen, überschreibbaren Speicher zur Speicherung von Kontrolldaten und die Fahrtschreiberanordnung weist eine Einrichtung zum Einschreiben von Kontrolldaten in den Fahrerkarten-Kontrölldatenspeicher und zum Auslesen der in diesem gespeicherten Kontrolldaten auf. Im Fahrtschreiber ist ein eingangsseitig mit der Einrichtung zum Auslesen von Daten aus dem Fahrerkarten-Kontrolldatenspeicher und ausgangsseitig mit der Einrichtung zum Einschreiben in diesen verbundener temporärer Kontrolldatenspeicher vorgesehen. Der Fahrtschreiber enthält weiterhin eine Steuereinrichtung, welchen seinen Betrieb derart steuert, dass beim Einsetzen einer Fahrerkarte in den Fahrtschreiber, die in der Fahrerkarte gespeicherten personenbezogenen Arbeitszeitdaten in den temporären Kontrolldatenspeicher geladen und dann während des Verbleibs der Fahrerkarte im Fahrtschreiber in diesem fortgeschrieben werden. Der Kontrolldatenspeicher kann eine Mehrzahl von getrennt zugreif- und löschbaren Speicherbereichen zur Speicherung von jeweils einem mehrteiligen Datensatz, mindestens umfassend eine Zeitsumme und eine zugehörige Angabe eines Erfassungszeitpunktes, aufweisen. Schließlich werden die (fortgeschriebenen) Daten vor Entnahme der Fahrerkarte in deren Kontrolldatenspeicher umgeladen und damit wieder eindeutig dem Fahrer zugeordnet. Übernimmt dieser später ein anderes Fahrzeug, werden seine Arbeitszeitdaten auch in diesem fortgeschrieben, so dass die Fahrerkarte stets die aktuelle, insbesondere an den gültigen Regelungen bewertete, Arbeitszeitbilanz enthält. Der Vergleichsdatenspeicher ist zur Speicherung von Lenk-, Bereitschafts-, sonstige Arbeits- und Ruhezeiten betreffenden Vergleichsdaten sowie von Verknüpfungsregeln für diese und die Anzeige- und/oder die Aufzeichnungseinrichtung sind zur separaten Anzeige und/oder Aufzeichnung der entsprechend erhaltenen Kontrolldaten ausgebildet. Zusätzlich enthält der Vergleichsdatenspeicher mindestens einen Vergleichsdatensatz in Zuordnung zu einem dessen territorialen Gültigkeitsbereich kennzeichnende Positionsdatensatz und die Verarbeitungseinrichtung verarbeitet die Fahrzustandsdaten mit den Normdaten in Abhängigkeit von der aktuellen Position des Fahrzeuges. Insbesondere im Zusammenwirken mit einem Positionsermittlungssystem ist dann an den Grenzen des Gültigkeitsbereiches bestimmter Arbeitszeitregelungen automatisch eine Anpassung der Arbeitszeitbewertung an andere Bestimmungen möglich. Ein anderer Normensatz kann aber bei Überschreitung einer Grenze auch manuell aktiviert werden. In beiden Fällen rechnet das System auch die aufgelaufenen Zeiten für das neue Regelsystem um und entlastet den Fahrer ein weiteres Mal von der Notwendigkeit der Aneignung an sich sachfremder Kenntnisse und von mühsamer Rechenarbeit. Zur Etablierung eines Kontrollsystems, bei dem die Wahrung des Datenschutzes gewährleistet ist, insbesondere zur Gewährung eines selektiven Zugriffs auf Speicherbereiche des Kontrolldatenspeichers zum Lesen der darin gespeicherten Daten und/oder zum Einschreiben von Daten in den Vergleichsdatenspeicher sind Zugriffssteuermittel vorgesehen, welche eine elektronisch lesbare Berechtigungskarte oder zwei Berechtigungskarten mit unterschiedlichen Zugriffssteuerfunktionen umfassen. In der Berechtigungskarte ist ein Speicher zur Speicherung von aus dem Fahrtschreiber übernommenen Kontrolldaten vorgesehen, wodurch eine unaufwendige Beweissicherung durch die Kontrollbehörden ermöglicht wird. Weiterhin ist für innerbetriebliche (wie auch für externe) Kontrollen ein mit einem Eingang der ersten Verarbeitungseinrichtung verbundener Nur-Lese-Speicher für fahrzeug- und/oder -gerätebezogenen Daten vorgesehen. Dieser Speicher sowie die Einrichtung zum Lesen der Fahrerkarte sind mit Eingängen einer Korrelatoreinheit verbunden, die ausgangsseitig mit der Anzeige- und/oder Aufzeichnungseinrichtung derart verbunden ist, dass anhand der Daten im Nur-Lese-Speicher einerseits und in der Fahrerkarte andererseits eine Prüfung der Berechtigung zum Führen des Fahrzeuges erfolgen und das Prüfungsergebnis angezeigt und/oder aufgezeichnet werden kann. Im Zusammenhang mit der Einführung einer elektronischen Führerscheinkarte kann der Fahrtschreiber weiterhin einen Schacht für diese aufweisen. Alternativ hierzu (oder auch zusätzlich) kann vorgesehen sein, dass die Fahrerkarte einen Speicher oder Speicherbereich für Daten zur Befähigung des Fahrers (etwa zu Gefahrguttransporten oder zur Personenbeförderung) enthält.

Eine gleichartige Ausgestaltung ist aus der EP 1 437 690 A1 bekannt. Diese weist wieder einen tragbaren elektronischen Speicher und einen digitalen Fahrtenschreiber mit einer Steuereinrichtung, einer Anzeige- und Eingabeeinrichtung, einem überschreibbaren Datenspeicher (für das Speichern der Kontrolldaten), einer ersten Schnittstellenschaltung, an welche der tragbare elektronischer Speicher angeschlossen werden kann, einer zweiten Schnittellenschaltung für das Lesen einer Fahrer-Beifahrerkarte und einer dritten Schnittstellenschaltung für das Lesen einer Kontrollgerätekarte (Polizei) auf. Der tragbare elektronische Speicher enthält eine Steuereinrichtung, eine Speichervorrichtung, eine erste und zweite Schnittstellenschaltung, einen Schalter, zwei LED's und eine Stromversorgungseinrichtung. An die erste Schnittstellenschaltung (serielle Schnittstelle gemäß RS 232 (IEEE 802.11) mit sechs pins) kann der digitale Fahrtenschreiber und an die zweite Schnittstellenschaltung (USB Schnittstelle = Universal Serial Bus = serielle Schnittstelle,) kann ein PC oder ein Laptop angeschlossen werden. Mittels des Schalters kann der tragbare Speicher in den Slave- oder Master-Modus umgeschaltet werden und die beiden LEDs dienen dabei zur Betriebszustandsanzeige. Die Speichervorrichtung des tragbaren Speichers kann als interner Speicher (interne Flash Speicher: programmierbarer, nichtflüchtiger Speicher oder microdisc) oder als einsteckbarer Flash Speicher (Einschubkarte) ausgestaltet sein. Die beidseitigen Anschlussstellen (sechspoliger Stecker, bzw. USB-Stecker bzw. Buchse für Flash Speicher) können mit abnehmbaren Schutzkappen abgedeckt werden. Zur Durchführung eines Herunterladens der Kontrolldaten vom digitalen Fahrtenschreiber muss der Bediener folgende Arbeitsschritte ausführen:
- Einführen seiner Kontrollgerätekarte in einen Steckplatz des digitalen Fahrtenschreiber (dritte Schnittstellenschaltung);
- Anschließen des tragbaren elektronischen Speichers an die erste Schnittstellenschaltung des digitalen Fahrtenschreiber zum Herunterladen;
- Herstellen der Verbindung zwischen digitalen Fahrtenschreiber und tragbaren elektronischen Speicher;
- Betätigung des Schalters und Senden der Anforderung an den digitalen Fahrtenschreiber und
- Beenden des Download-Vorgangs.

Das Protokoll ist auf Master/Slave-Basis aufgebaut, wobei der tragbare elektronische Speicher den Master und der digitale Fahrtenschreiber den Slave bildet. Durch Betätigung des Schalters am tragbaren elektronischen Speicher (Umschalten in den Slave-Modus) können über die USB-Schnittstelle bzw. durch Entnahme des einsteckbaren Flash Speichers und Einschieben in ein Lesegerät/PC oder ein Laptop können die Kontrolldaten heruntergeladen werden.

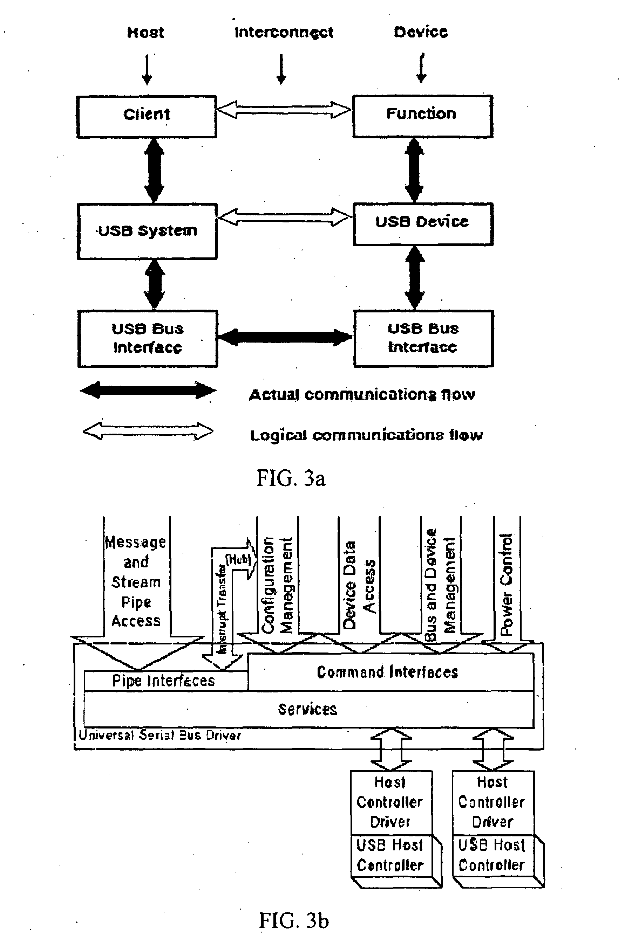

Weiterhin ist aus der nicht vorveröffentlichten DE 10 2004 029 889 A1 ein erstes Endgerät zur Datenkommunikation mit mindestens einem zweiten Endgerät unter Verwendung von in einem nichtflüchtigen Programmspeicher des ersten Endgeräts gespeicherten und ausführbaren Gerätetreibern bekannt. Dabei wird von dem bekannten Universal Serial Bus On The Go (USBOTG) Konzept, einer Ergänzung zur aktuellen Universal Serial Bus Spezifikation 2.0 ausgegangen, welches zwischen vielen verschiedenen Geräteklassen, nämlich Eingabegeräte, Audiogeräte, Massenspeicher und Komrnunikationsgeräte, unterscheidet und darauf ausgelegt ist, dass mobile Endgeräte (Mobiltelefone, Personal Digital Assistants, Massenspeicher, Drucker, Scanner, Tastatur, Camcorder, MP3-Abspielgeräte etc.) untereinander einen Datenaustausch realisieren, wobei auf einen vollständig implementierten Wirtrechner (Host-Personal Computer) verzichtet werden kann. Die Endgeräte selbst übernehmen eine Doppelrolle und sind einerseits Hosts und andererseits Peripheriegeräte. Das USBOTG-Konzept ermöglicht eine dynamische Umschaltung zwischen den Funktionen eines Hosts und eines Peripheriegeräts, d.h. Umschaltung zwischen Master/Slave (siehe **FIG. 3a** bis **FIG. 3c**). Für den speziellen Fall der Firmware, das ist die Software für den Betrieb des GerätsBetriebssystem, welche im allgemeinen während der Gerätelebensdauer konstant bleibt und in Festwertspeichern (ROM, PROM, EPROM) hinterlegt und nicht ohne weiteres ausgetauscht werden kann, nun doch einen neuen Gerätetreiber, d.h. Software, mit der das Betriebssystem eine bestimmte Hardwarekomponente steuert, hinzufügen zu können, ist bei dem Gegenstand der nicht vorveröffentlichten DE 10 2004 029 889 A1 vorgesehen, dass im nichtflüchtigen Programmspeicher des ersten Endgeräts ein Speicherbereich für nachladbare Gerätetreiber reserviert ist. Bei der Entwicklung des nachladbaren Gerätetreiber kann das begrenzte .Speichervermögen des nichtflüchtigen Programmspeichers des ersten Endgeräts beachtet und der Gerätetreiber muss angepasst an die vorgegebenen Softwareschnittstellen des im nichtflüchtigen Programmspeicher des ersten Endgeräts gespeicherten Betriebssystems entwickelt werden. Dadurch ist eine Neuzulassung des ersten Endgeräts nicht erforderlich. Das Aufspielen des nachladbaren Gerätetreibers erfolgt über spezifizierte Schnittstellen, wie beispielsweise über die USB-Schnittstelle selbst, direkt über serielle Schnittstellen oder durch Herunterladen des nachladbaren Gerätetreibers von einem Personal Computer bzw. aus dem Internet mittels des mobilen Telekommunikationsnetzes. Als erste Endgeräte sind beispielsweise auch mobile drahtlose Telekommunikationsmodule, Personal Digital Assistants, Kameras, Drucker, MP3 Abspielsgeräte etc. einsetzbar. Als zweite bzw. weitere Endgeräte eignen sich neben den externen Speichermedien auch Mobiltelefone, Kameras MP3 Abspielgeräte, Scanner, Drucker und Eingabegeräte wie Tastaturen z.B. für Mobiltelefone. Das Aufspielen des nachladbaren Gerätetreibers ist dabei nicht auf Endgeräte beschränkt, die über USB-Anschlussstellen verfügen, sondern lässt sich ebenso bei anderen Endgeräten einsetzen, die untereinander zur drahtgebundenen oder drahtlosen Datenkommunikation bestimmt sind.

Schließlich ist aus der WO 2004/055635 A2 ein Datensicherungskonzept für Mobiltelefone bekannt, bei dem insbesondere die Daten der. SIM-Karte (Subscriber Identity Module = Teilnehmeridentitätsmodul), welche zur Nutzung von Mobiltelefonen im GSM-Mobilfunknetz (Global System for Mobile Communication) notwendig ist, um den Zugriff auf die entsprechenden Netze zu ermöglichen, auf einem transportablen Datenspeicher abgespeichert werden können. Zur Authentisierung des Mobilfunkteilnehmers im GSM-Mobilfunknetz ist auf der SIM-Karte ein Identifikationskey gespeichert, wobei der Identifikationskey auch der Vermittlungsstelle (MSC Mobile Switching Center, dort abgelegt im "Home Location Register") bekannt ist. Das Authentikationsverfahren beruht auf einem Vergleich von Rechenergebnissen, die parallel in der SIM-Karte und in der Vermittlungsstelle ermittelt werden. Während der Authentisierung bekommt das Mobiltelefon von der Vermittlungsstelle eine Zufallszahl gesendet und berechnet aus dieser Zahl und dem auf der Chipkarte gespeicherten Identifizierungskey nach einem festgelegten Algorithmus einen Zahlenwert. Bei Gleichheit der Ergebnisse ist die Teilnehmerauthentität gewährleistet. Jede Authentikation führt zu einer neuen Berechnung unter Anwendung einer neuen Eingabegröße, wodurch Fehlgebühren durch Manipulationen ausgeschlossen werden. Um nun zumindest die Daten der SIM-Karte und weitere persönliche Daten zu sichern, entfernt der Mobilfunkteilnehmer bei einer ersten Ausführungsform der WO 2004/055635 A2 die SIM-Karte aus dem Mobiltelefon, führt den transportablen Datenträger in den SIM-Kartenträger des Mobiltelefons ein, lädt unter Zuhilfnahme der Tatstatur und des Displays des Mobiltelefons die zu sichernden Daten auf den Datenträger herunter, entfernt diesen aus den SIM-Kartenträger und setzt wieder die SIM-Karte des Mobiltelefons ein. Hierzu weist der transportable Datenträger eine Steuereinrichtung mit einem Programmspeicher (ROM), weitere Speicher, nämlich Festwertspeicher (EEPROM), Arbeitsspeicher (RAM), sowie eine Schnittstellenschaltung (I/O) und Kontakte zur Verbindung mit der Stromversorgung (Vcc, GND) des Mobiltelefons auf. Bei einer zweiten Ausführungsform des transportablen Datenträger, weist das im wesentlichen ei-förmige Gehäuse, neben einer Taste zum Auslösen des Herunterladevorgangs bzw. zum Sichern der heruntergeladenen Daten vor dem Überschreiben und entsprechender Anzeigemittel hierfür, drei verschiedene Schnittstellenschaltungen auf, nämlich einen Schlitz zur Einführung der SIM-Karte, eine Schnittstelle zur Aufnahme eines Adaptermoduls zum Anschließen des Mobiltelefons und eine Schnittstelle zum Anschließen eines Computers oder eines PDAs (Personal Digtal Assistant) oder eines Mobiltelefons nach dem CDMA-Standard oder eine USB-Schnittstelle oder Firewire oder Bluetooth u.a. Die interne Speichereinrichtung kann dabei entweder verschiedene Speicher aufweisen oder in verschiedene Speicherbereiche unterteilt sein, um beispielsweise Daten von verschiedenen Mobiltelefonen oder verschiedenen Mobiltelefonteilnehmern getrennt abzuspeichern. Der Zugriff auf diese verschiedenen Speicher/Speicherbereiche kann über Passwort abgesichert sein.

WO 00/42491 offenbart einen Transportierbaren Informationsträger gemäß dem Obergegriff des Anspruchs 1.

Wie die vorstehende Würdigung des Standes der Technik aufzeigt, sind für unterschiedliche Anwendungsfälle entsprechend ausgestaltete transportierbare Informationsträger bekannt. Die Kommunikation zwischen Informationsträger und elektrischen Gerät erfolgt anhand von spezifizierten Protokollen, wobei in der Regel spezielle Hard- und Softwarekomponenenten mit einer Reihe von teueren, für die Kommunikation speziell ausgelegten Komponenten erforderlich sind. Deshalb ist der Aufwand bei einer Kontrolle, Wartung und Archivierung der Daten, beispielsweise für den Anwendungsfall digitaler Fahrtenschreiber, sehr hoch. Der im PC Bereich bekannte Memory Stick (USB) ermöglicht keinen Masterbetrieb und keine interaktive Eingabe für das Einlesen von Daten. Ebenso sind keine Schutzmechanismen für unbefugten Datenzugriff implementiert. Zuwenig Beachtung findet die Ausgestaltung eines offenen Systems, insbesondere das zur Verfügung stellen einfacher und sicherer Kommunikationsmechanismen. Beispielsweise erfolgt beim digitalen Fahrtenschreiber der Verbindungsaufbau und die Kommunikation, stets mit einer Datenrate von 9 600 Baud; andererseits könnten bei einer USB-Schnittstelle (wie beim Gegenstand der EP 1 437 690 A1) über das vieradrige Buskabel die angeschlossenen Geräte auch mit Strom versorgt und beispielsweise bei der Version USB 2.0 Datentransferraten bis zu 480 Mbps ermöglicht werden (siehe **FIG. 3a** bis **FIG. 3c**). Deshalb fehlen in der Praxis Verfahren oder transportierbare Informationsträger, bei welchen trotz einfacher Bedienung die Anwendungen variabel gestaltbar sind und daher keine Beschränkungen hinsichtlich Einsatzmöglichkeit und Benutzerkreis vorliegen und bei welchen eine individuelle, insbesondere automatisch anpassbare, interaktive Kommunikation sicherstellt wird. Besonders bedeutsam ist dies, weil die Datenverarbeitungsgeräte und Zubehör herstellende Industrie, seit vielen Jahren als äußerst fortschrittliche, entwicklungsfreudige Industrie anzusehen ist, die schnell Verbesserungen und Vereinfachungen aufgreifen und in die Tat umsetzen.

Der Erfindung liegt gegenüber den bekannten transportierbaren Informationsträger und Verfahren hierzu die Aufgabe zugrunde, diese derart weiterzuentwickeln, dass eine individuelle, insbesondere automatisch anpassbare, interaktive Konfiguration und auch einem ungeübten Benutzer die rasche Datenübernahme ermöglicht und Benutzerfehler verhindert werden.

Diese Aufgabe wird erfindungsgemäß bei einem transportierbaren Informationsträger zum Datenaustausch zwischen elektrischen Geräten mit einer Steuereinrichtung und einem Speicher nach Patentanspruch 1 gelöst, welcher aufweist:
➢ eine einzige Schnittstellenschaltung zum Anschluss an das jeweilige Gerät,
➢ einen Datenspeicher zur Zwischenspeicherung der vom jeweiligen Gerät zugeführten Daten,
➢ Eingabe- und Anzeigemittel zur benutzergesteuerten Bedienung und Benutzerfiihrung,
➢ und eine mit diesen verbundene Steuereinrichtung mit Programmspeicher zur Ausführung von Anwenderprogrammen und von Kommunikationsfunktionen,
derart, dass zur Konfiguration beim Anschließen des Informationsträgers an das jeweilige Gerät mittels der Steuereinrichtungen eine Authentifikation, eine automatische Erkennung des Transfermoduses (Master/Slave) und der Datentransferrichtung und nach deren Maßgabe eine Wahl der entsprechenden Übertragungsart/ -geschwindigkeit/ -protokolls für das Herunterladen der Daten durchführt wird und dass nur nach erfolgreicher Authentifikation das Ein- und Auslesen sowie Löschen von Speicherbereichen des Datenspeichers ermöglicht wird.

Der erfindungsgemäße Informationsträger weist den Vorteil auf, dass infolge der flexiblen Kommunikations-Mechanismen der einfache Einsatz in vielen Anwendungsfällen und Systemarchitekturen auf überraschend einfache und kostengünstige Art und Weise ermöglicht wird. Hinzukommt, dass auch ein ungeübter Benutzer den Informationsträger beim Datenaustausch bedienen kann, ohne dass die Gefahr eines unbefugten Datenzugriffs oder eines Benutzerfehlers besteht.

Weiterhin wird diese Aufgabe erfindungsgemäß bei einem Verfahren zum Datenaustausch zwischen elektrischen Geräten mit einer Steuereinrichtung und einem Speicher mittels eines transportierbaren Informationsträger, nach Patentanspruch 5 gelöst, welcher eine einzige Schnittstellenschaltung, einen Datenspeicher zur Zwischenspeicherung der vom jeweiligen Gerät zugeführten Daten, Eingabe- und Anzeigemittel, und eine Steuereinrichtung mit Programmspeicher zur Ausführung von Anwenderprogrammen und von Kommunikationsfunktionen aufweist, bei dem zur Konfiguration mittels der Steuereinrichtungen:
➢ beim Anschließen des Informationsträgers an das jeweilige Gerät eine Authentifikation durchführt wird,
➢ eine automatische Erkennung des Transfermoduses (Master/Slave) und der Datentransferrichtung durchführt wird,
➢ eine Wahl der entsprechenden Übertragungsart/ -geschwindigkeit/ -protokolls für das Herunterladen der Daten durchführt wird und
➢ nur nach erfolgreicher Authentifikation das Ein- und Auslesen sowie Löschen von Speicherbereichen des Datenspeichers ermöglicht wird.

Das erfindungsgemäße Verfahren weist den Vorteil auf, dass die Sicherheitsbedingungen in jeder Hinsicht eingehalten sind, vorzugsweise durch die transparente Weitergabe der Authentisierungsdaten. Die Entwicklung, Produktion und Vertrieb eines solchen Informationsträgers kann dabei unabhängig von einem speziellen Anwendungsfall erfolgen.

In Weiterbildung der Erfindung ist, gemäß Patentanspruch 2, die Steuereinrichtung mit einem Kommunikationsprozessor, einer Speicherverwaltung und einer Speicherzugriffskontrolle verbunden oder weist diese auf.

Diese Weiterbildung der Erfindung weist durch die Benutzung eines Kommunikationsprozessor den Vorteil auf, dass beispielsweise eine handelsübliche Service-Schnittstelle (RS-232) zur Verfügung gestellt werden kann und dass die Steuereinrichtung nicht mit Rechenleistung für die Auswertung, beispielsweise der Synchronisationsdaten, oder Parametrierung der Datenübertragung belegt ist. In der Praxis werden durch die Verringerung der Anforderungen an die Steuereinrichtung die zusätzlichen Kosten für den Kommunikationsprozessor kompensiert.

Vorzugsweise ist, gemäß Patentanspruch 3, zur flexiblen Spannungsversorgung ein mit der Schnittstellenschaltung verbundenes Netzteil vorgesehen.

Durch die flexible Spannungsversorgung (großer Versorgungsbereich) ist jederzeit die Anpassung an das angeschlossene Gerät möglich, ohne dass dies gleichzeitig eine neue Dimensionierung des Netzteils bedeutet. Beispielsweise wird beim Anwendungsfall digitaler Fahrtenschreiber einerseits der Informationsträger aus dem Bordnetz 24/12V über den Tachographen aus dem Fahrzeug und andererseits über einen Adapter von der USB-Schnittstelle (+5V) des PC/Laptops versorgt.

In Weiterbildung der Erfindung sind, gemäß Patentanspruch 3, die Kommunikationsfunktionen bzw. Applikationen nicht fest vorgegeben, sondern auf Basis einer frei programmierbaren und auf Kommunikationsfunktionen optimierten Steuereinrichtung ausgebildet.

Diese Weiterbildung der Erfindung weist die Vorteile auf, dass die Entwicklung, Produktion und Vertrieb einer solchen Steuereinrichtung unabhängig von einem speziellen (Daten-)Bussystem erfolgen kann, dass Erweiterungen innerhalb der Kommunikationsfunktionen bzw. der Applikationen oder die Implementierung komplett neuer Kommunikationsfunktionen bzw. Applikationen per Softwareupdate erfolgen können und keine neue Steuereinrichtung benötigen und dass die Option auf zwei oder mehr Kommunikationsschnittstellen bzw. Applikationen durch Laden der Software festlegbar ist und diese damit völlig flexibel kombinierbar sind. Dieser flexible Aufbau der erfindungsgemäßen Steuereinrichtung weist erhebliche Vorteile gegenüber dem Aufbau durch Programmierung von FPGAs (Field programmable Gate Array) oder Teile davon auf, welcher nämlich einer fest verdrahteten Logik entspricht. Infolge des flexiblen Befehlssatzes und der zugehörigen Logikfunktionsblöcke können in einem wesentlich höheren Systemtakt und ereignisgesteuert mehrere Teilaufgaben parallel gelöst werden, wodurch protokollunabhängig eine hohe Verarbeitungs- und Übertragungsgeschwindigkeit und Durchlässigkeit in beide Richtungen erreicht wird.

Bei einer bevorzugten Ausgestaltung der Erfindung werden, gemäß Patentanspruch 6, mittels Steuereinrichtung, einer Speicherverwaltung und einer Speicherzugriffskontrolle in den Datenspeicher eingelesene Daten mit einer Kennung (Kennzeichen u. Datum) unverkennbar abgelegt und durch Betätigen der Eingabemittel wird nur eine Auswahl von herunterladbaren Daten jedoch nicht ein Löschen der Daten ermöglicht.

Diese Ausgestaltung der Erfindung weist die Vorteile auf, dass Dateninhalte mehrerer Geräte im Informationsträger unverkennbar archivierbar sind und dass keine Änderung der Dateninhalte, sondern nur ein Datenaustausch bzw. komplettes Löschen nach dem Herunterladen möglich ist.

Vorzugsweise sind, gemäß Patentanspruch 7, die Anzeigemittel als Leuchtdioden ausgestaltet und durch Leuchten und Blinken in unterschiedlichen Frequenzen erfolgt eine Rückmeldung für den Anwender über die ausgewählten Funktionen, den Downloadstand (Ende eines geladen Blockes) sowie eine Fehlermeldung. Durch die Benutzerführung mittels Leuchtdioden können auf überraschend einfache und kostengünstige Art und Weise Benutzerfehler verhindert werden. Somit ist der erfindungsgemäße Informationsträger auch für ungeübte Benutzer bestens geeignet.

Bei einer bevorzugten Ausgestaltung der Erfindung werden, gemäß Patentanspruch 10, die vom jeweiligen Gerät heruntergeladenen Daten blockweise im Datenspeicher abgespeichert und die Speicherverwaltung verhindert ein beabsichtigtes Überschreiben im Datenspeicher, warnt den Benutzer vor nicht ausreichender Speicherkapazität und lässt im Falle des vollen Datenspeichers keine weitere Übernahme von Daten zu.

Diese Ausgestaltung der Erfindung weist die Vorteile auf, dass ein ungeübter Benutzer den erfindungsgemäßen Informationsträger sicher bedienen kann und Fehlbedienungen ausgeschlossen sind.

In Weiterbildung der Erfindung wird, gemäß Patentanspruch 11, zur Ver- und Entschlüsselung der Daten ein starrer, ein dynamischer oder ein rollierender Schlüssel oder ein "verschlüsselter Container" benutzt, bei dem die Daten zu einer Data Unit gruppiert und mehrere Data Units zu einer Container Unit gruppiert werden und die Reichweite der Verschlüsselung erstreckt sich auf Data Units oder ganze Container Units.

Diese Weiterbildung der Erfindung ermöglicht - durch die unterschiedlichen Verfahren zur Ver- und Entschlüsselung der Daten - auf überraschend einfache Art und Weise eine gezielte, adaptive Anpassung und ermöglicht insbesondere die Anzahl der gegebenenfalls notwendigen Wiederholungen deutlich zu reduzieren und somit die Rate der Blockfehler insgesamt zu senken. Erfindungsgemäß erfolgt die Sicherung der verbindungsorientierten, insbesondere der von der Datentransferrichtung abhängigen Übertragung von vorgegebenen/vorgebbaren Datenblöcken durch eine solche gezielte und modifizierte Wiederholung, welche berücksichtigt, dass die Übertragungssicherheit der Datenblöcke auch von dem Inhalt der Daten abhängt. Dabei kann für die zweite Wiederholung die Ver- und Entschlüsselung auf diejenigen Datenstrukturen optimiert werden, welche bei der ersten Ver- und Entschlüsselung nicht besonders gut abgeschnitten haben und so weiter.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- **FIG. 1**: das Blockschaltbild einer bevorzugten Ausführungsform der Erfindung,
- **FIG. 2**: in Explosionsdarstellung von der Draufsicht und Unteransicht eine Ausgestaltung des erfindungsgemäßen Informationsträgers und
- **FIG. 3a, 3b** und **3c**: das Zusammenwirken zwischen Host (PC) mit Gerät (z.B. USB-Stick), die USB-Treiberstruktur und den Wirkungsbereich am Beispiel des UHCI beim Stand der Technik.

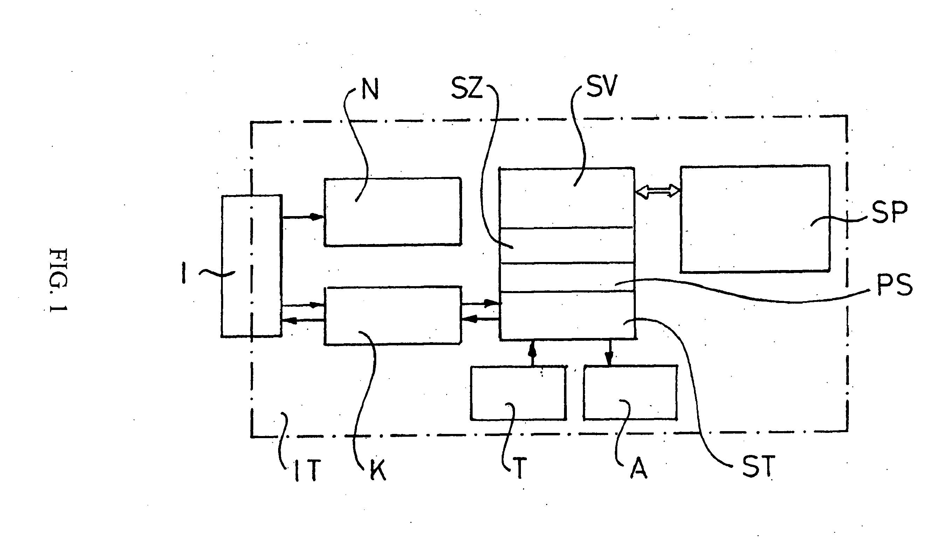

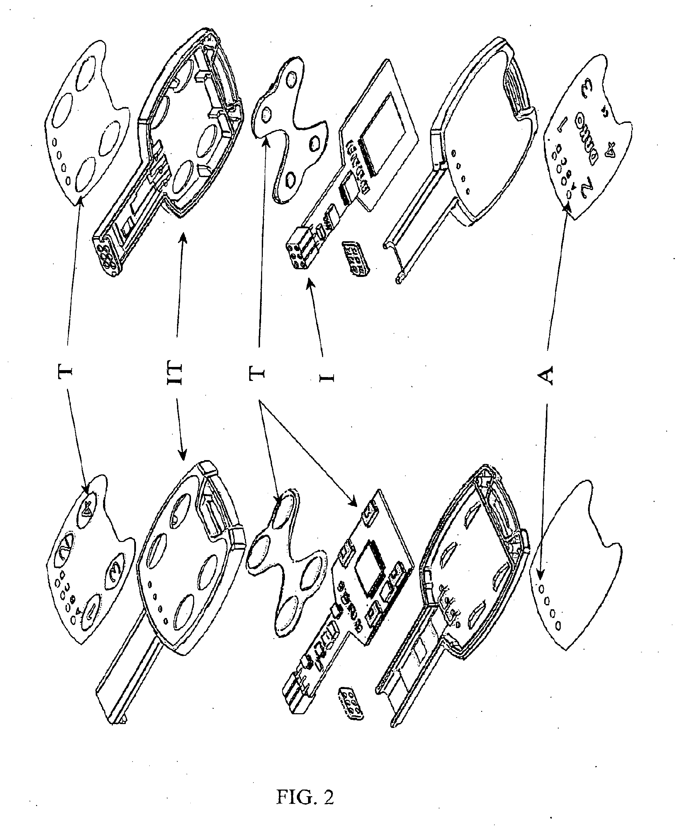

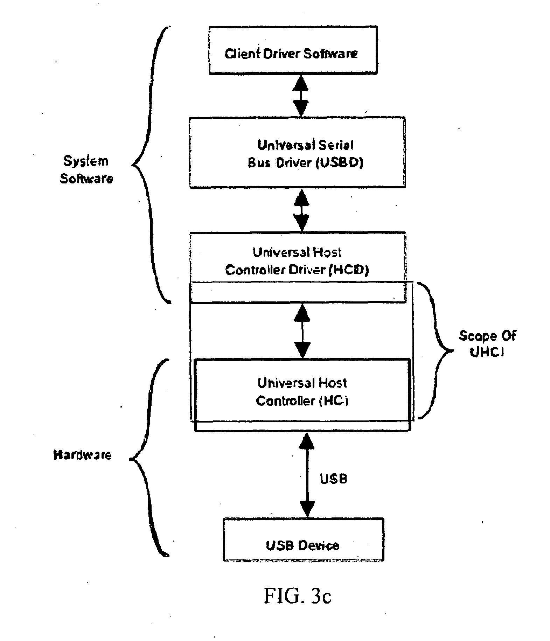

**FIG. 1** zeigt eine bevorzugte Ausführungsform des erfindungsgemäßen transportierbaren, konfigurierbaren Informationsträger IT, welcher es dem Anwender erlaubt, aus einem Gerät Daten in diesen zu übertragen und diese Daten zu transportieren und wieder an einem anderen Gerät auszulesen und anzuzeigen. Auch wenn nachfolgend die Ausgestaltung der erfindungsgemäßen Lösung für den Einsatz bei einem digitalen Fahrtenschreiber (siehe **FIG. 2**) beschrieben ist, so ist der Einsatz des Verfahrens und des Informationsträgers auch bei anderen Geräten mit entsprechenden Schnittstellen möglich. Dies ist darauf zurückzuführen, dass das erfindungsgemäße Konzept auf Konfigurierbarkeit aufbaut, eine einheitliche, geräteunabhängige Fehlerbehandlung ermöglicht, und die einfache Anpassung an die jeweiligen Gegebenheiten und Einbindung ohne Änderung der Erfindung bzw. des Grundkonzepts erlaubt. Im Vergleich zur USB-Schnittstelle besitzt der erfindungsgemäße Informationsträger IT keine Universalschnittstelle und benötigt auch keinen Stack. Die Zusammenarbeit zwischen Host (PC) und Gerät (z.B. USB-Stick) auf logischer und physikalischer Ebene ist in **FIG. 3a** dagestellt. **FIG. 3b** zeigt den softwaremäßigen Aufbau des Stacks am Beispiel von Treibern und **FIG. 3c** zeigt die Verbindung vom USB-Controller zum Client, welche in Interfaces spezifiziert und umgesetzt
- UHCI (Universal Host Controller Interface)
- OHCI (Open Host Controller Interface)
- EHCI (Extended Host Controller Interface) USB2.0
ist, wobei anhand des Beispiels UHCI der Wirkungsbereich dargestellt ist. Wie daraus hervorgeht ist die USB Schnittstelle eine offene Schnittstelle mit einen USB Stack, einer Vielzahl von Treibern und Schnittstellen und einem vereinbarten USB Protokoll. Eine USB Verbindung besteht immer aus einen Master (PC) und einem Slave (Device). Für den Anwendungsfall, dass zwei Master zusammen geschaltet werden, z.B. PC und Laptop oder PC und PDA, wurde das Protokoll erweitert. Diese Erweiterung nennt sich USB OTG. Beide Master klären nach dem Kontaktieren zuerst per Protokoll wer der Master sein darf und welcher sich mit der Funktion des Slaves abfinden muss.

Der in den **FIG. 1** und **FIG. 2** dargestellte Informationsträger IT weist zum Datenaustausch mit dem digitalen Fahrtenschreiber (in der Zeichnung nicht dargestellt) eine einzige Schnittstellenschaltung I, einen Datenspeicher SP zur Zwischenspeicherung der vom digitalen Fahrtenschreiber zugeführten Daten, Eingabe- und Anzeigemittel T, A zur benutzergesteuerten Bedienung und Benutzerführung beim Datenaustausch, und eine Steuereinrichtung ST mit Programmspeicher PS zur Ausführung von Anwenderprogrammen und von Kommunikationsfunktionen auf. Weiterhin sind in der Steuereinrichtung ST ein Kommunikationsprozessor K, eine Speicherverwaltung SV und eine Speicherzugriffskontrolle SZ vorgesehen, wobei diese Einrichtungen ohne Änderung des erfindungsgemäßen Konzepts auch separat ausgeführt werden können. Schließlich ist zur flexiblen Spannungsversorgung ein mit der Schnittstellenschaltung I verbundenes Netzteil N vorgesehen. Die Aufgaben des Kommunikationsprozessors K sind:
- Empfang/Versenden der Daten über die UART-Leitung (Universal Asynchronous Receiver/Transmitter = universeller asynchroner Send-/empfangsbaustein),
- Sicherung der Übertragung (Parity-Modes: z.B. Paritätsprüfung als einfaches Verfahren zur Erkennung von Übertragungsfehlern, wobei für eine Gruppe von Bits, die darin enthaltene Anzahl der "Einsen" durch die entsprechende Belegung eines zusätzlichen Paritätsbits auf eine gerade bzw. ungerade Anzahl ergänzt wird),
- Entlastung des Hauptprozessors von IO-Arbeiten,
- Zwischenspeicherung der zu übertragenden Daten / übertragenen Daten
- Signalisierung mittels IRQ (Interrupt Request: ein Hardware-Signal, das von Geräten verwendet wird, um eine Interrupt-Service-Routine des Host-Systems auszulösen. Bei Auslösung eines IRQs beendet die Steuereinrichtung alle momentanen Berechnungen, sichert den Berechnungsstatus und behandelt vorrangig den IRQ) an den übergeordneten Prozessor, wenn Daten verfügbar sind oder Daten erfolgreich gesendet wurden,
- Datenpakete können mittels DMA (Direct Memory Acces = Direktzugriff auf den Arbeitsspeicher eines Rechners unter Umgehung der Steuereinrichtung; wenn verfügbar) selbstständig abgeholt und übertragen oder nach Empfang in den Arbeitsspeicher gelegt werden.

Die Realisierung des Konimunikationsprozessors K ist als externe oder interne Einheit möglich (in **FIG. 1** als externer und in **FIG. 2** als interner Funktiönsblock).

Zum Diebstahlschutz ist dem Informationsträger IT eine eindeutige Seriennummer fest zugeordnet und dessen Betriebsprogramm kann modular erweitert und ausgetauscht werden. Die Steuereinrichtung ST verarbeitet die Daten im Hammingcode mit einer Hamming-Distanz von ≥ 1, insbesondere 4, und kann auch die Verschlüsselung und Entschlüsselung der Daten durchrühren. Für die Datenübertragung ist ein robustes Dätensicherungsverfahren zu benutzen. Vorzugsweise wird ein CRC-Datensicherungsverfahren (cyclic redundancy check = zyklische Blockprüfung), z.B. CRC-32 benutzt, bei dem die zu übertragenden Datenworte durch ein Polynom dividiert werden und der Rest der Division jeweils als Prüfzeichen mit übertragen wird. Empfängerseitig wird bei den empfangenen Datenworten die gleiche Division durchgeführt und kontrolliert, ob das Ergebnis mit dem Prüfzeichen übereinstimmt.

Die Datenübernahme vom digitalen Fahrtenschreiber erfolgt durch einfache Bedienung, wie nachfolgend kurz beschrieben wird:
- Nach dem Einstecken des Informationsträgers IT in die entsprechende Buchse des digitalen Fahrtenschreibers kann beispielsweise über eine von vier Tasten T eine Auswahl von downloadbaren Datenblöcke eingeben werden. Dies ist vorteilhaft, um die Dowrdoadzeit gering zu halten. Daten sind bei diesem Anwendungsfall zum Beispiel: Geschwindigkeit, Aktivitäten über einen bestimmten Zeitraum, Ereignisse und andere im digitalen Fahrtenschreiber abgelegte Datenblöcke.
- Über wiederum vier Leuchtdioden A (einfache Anzeige) erfolgt eine Rückmeldung für den Anwender der ausgewählten Funktion (Downloadblock, -blöcke), den Downloadstand (Ende eines geladen Blockes) sowie einee Fehlermeldung. Dies wird durch Leuchten und Blinken in unterschiedlichen Frequenzen der Leuchtdioden erreicht.
- In den Datenspeicher SP eingelesene Daten werden mit einer Kennung (Kennzeichen und Datum) unverkennbar abgelegt. Löschen am Informationsträgers IT ist nicht möglich.
- Die Benutzerführung und Fehlertoleranz der Software der Steuereinrichtung ST des Informationsträgers IT verhindern Benutzerfehler.

Das Auslesen des Informationsträgers IT erfolgt über eine Adapterkarte beispielsweise am PC wie nachfolgend kurz beschrieben wird:
- Durch eine PC Software (nicht handelsüblich) kann über eine Adapterkarte der gesamte Inhalt oder auch einzelne Blöcke aus dem Datenspeicher SP vom PC angefordert und gespeichert werden.
- Das Löschen von übertragenen Speicherblöcken, Löschen von nicht benötigten Speicherblöcken des Datenspeichers SP ist nur vom PC aus möglich, um die einfache Bedienung im Feld zu gewährleisten.
- Die PC-Übernahmesoftware nimmt keine Änderung an den Dateninhalten vor. Die Dateninhalte können zur Kontrolle / Auswertung in einer übersichtlichen Form dargestellt werden.

Für eine optimale Datenübertragung sind erfindungsgemäß folgende Maßnahmen vorgesehen:
- eine automatische Erkennung des Transfermoduses (Master/Slave) und Wahl der entsprechenden Übertragungsart/ -geschvvindigkeit/ -protokolls.
- die Daten werden in gesicherten Paketen übertragen.
- die Korrimunikationsprotokolle beinhalten Kommandos zum Aushandeln der optimalen Übertragungsgeschwindigkeit.

Um die Datensicherheit der transportierten Daten zu gewährleisten und vor Zugriff unbefugter Personen zu schützen sind erfindungsgemäß folgende Maßnahmen vorgesehen:
- die Daten werden mit Fehlerschutz-/korrekturmaßnahmen gespeichert.
- der Datenzugriff von außen ist nur mittel elektronischen Schlüssel möglich (Authentifikation).
- der SW-Download ist auch nur nach erfolgreicher Authentifikation durchführbar.
- die Software im Programmspeicher PS des Informationsträgers IT stellt sicher, dass Daten transportiert aber nicht verändert werden.
- die Löschung der Daten im Datenspeicher SP des Informationsträgers IT ist erst nach erfolgreicher Authentifikation möglich.
Um das Einsatzgebiet des erfindungsgemäßen Informationsträgers IT so groß wie möglich zu gestalten, ist erfindungsgemäß die Datenübernahme mehrerer digitaler Fahrtenschreiber möglich. Hierzu weist eine Speicherverwaltung SV folgende Funktionen auf:
- Die Daten werden im Datenspeicher SP entsprechend ihres Herkunftgeräts eindeutig abgelegt.
- Die Auslesung ermöglicht gezielt diese Daten im Datenspeicher SP anzusprechen.
- Die Speicherverwaltung SV verhindert unbeabsichtigtes Überschreiben während des Übemahmebetriebs bei der Tachographenauslesung.
- Die Speicherverwaltung SV warnt den Benutzer vor nicht ausreichender Speicherkapazität und lässt im Falle des vollen Datenspeichers SP keine weitere Übernahme zu.

Weiterhin kann erfindungsgemäß durch eine spezielle PC-Software das aktuelle Programm im Informationsträger IT jederzeit den Bedürfnissen des/der Anwender bzw. Anwendergruppen und des Einsatzzwecks angepasst oder komplett verändert werden. Insbesondere kann die Software des Informationsträgers IT modular erweitert und ausgetauscht werden und der Informationsträger IT ist über eine eindeutige Seriennummer identifizierbar, welche nur im Werk eingestellt werden kann. Die Seriennummer des Informationsträgers IT ist vom Hersteller permanent gespeichert (Identifikation-Diebstahlschutz). Zur Ver- und Entschlüsselung der Daten kann ein dynamischer Schlüssel oder ein ;,verschlüsselter Container" benutzt werden. Vorzugsweise sind die Daten zu einer Data Unit gruppiert (gemäß Ihrer Bestimmung) und mehrere Data Units können wiederum zu einer Container Unit gruppiert werden. Um die Sicherheit und Vertraulichkeit dieser Data Units / Container Units zu gewährleisten, werden diese verschlüsselt abgelegt/übertragen. Die Reichweite der Verschlüsselung kann sich dabei auf Data Units oder ganze Container Units (enthält unterschiedliche Datenbereiche mit unterschiedlicher Bedeutung) erstrecken. Dem zuletzt genannten Verfahren steht dem Vorteil der schnellen Verschlüsselung der Nachteil, dass die komplette Container Unit entschlüsselt werden muss, auch wenn nur bestimmte Datenbereiche benötigt werden. Als Verschlüsselungsverfahren können Methoden mit "starren" Schlüsseln oder Methoden mit "rollierenden" Schlüsseln zum Einsatz kommen. Unter "rollierende" Schlüssel ist zu verstehen, dass diese für eine bestimmte Zeit gelten und dann wieder neu ausgehandelt werden, wobei die Gegenseite immer einen Schritt langsamer sein muss.

In der Praxis ist für den Einsatzfall digitaler Fahrtenschreiber der Informationsträger IT mit Öse ca. 7cm lang und keine 2cm breit. Die Mechanik der Schnittstelle ist für den Tachographen vorbereitet und die vier SMD-Leuchtdioden A sind beidseitig der Leiterplatte angeordnet, um eine gute Ablesbarkeit beim Einstecken in den digitalen Fahrtenschreiber (vier verschiedene 90°-Stellungen) zu ermöglichen. Der Adapter besitzt die gleiche Schnittstelle, wie der Tachograph, um den Aufwand in Informationsträger IT klein zu halten. Erfindungsgemäß weist der Informationsträger IT eine flexible Spannungsversorgung (große Versorgungssrange) auf. Einerseits versorgt dieser sich aus dem Bordnetz 24/12V über den Tachographen aus dem Fahrzeug andererseits wird am Adapter der Informationsträger IT über den Adapter von der USB-Schnittstelle (+5V) des PCs versorgt.

Die vorstehend beschriebene Ausgestaltung des erfindungsgemäßen Informationsträgers IT zeichnet sich vor allem durch die flexible Konfiguration aus und erfüllt zusammenfassend folgende Anforderungen:
- Minimale Baugröße und Gewicht (für eine Hosentasche oder einen Schlüsselbund).
- Robustes Design.
- Eine einzige Schnittstelle für unterschiedliche Baudraten (adaptive Baudrate).
- Anwendungen variabel gestaltbar durch downloadbare Software.
- Datenverkehr je nach Aufgabe im Master oder Slave Mode möglich.
- Userinterface verfügbar.
- Minimale Tastatur und Anzeige (LED) für einfachste Bedienung.
- Unterstützt unterschiedliche Kommunikatiönsprotokolle bei den jeweiligen Datentransferrichtungen.
- Ermöglicht einen n zu m Betrieb (n Datenquellen, m Datensinken).
- Unterstützt die Datenverwaltung und das Management im n zu m Betrieb
- Datenausgabe auch verschlüsselt möglich
- Dateninhalte mehrerer Geräte sind im Stick unverkennbar archivierbar.
- Verhinderung von unbeabsichtigten Löschen durch die Bedienung an DATA Stick wird durch eine entsprechende Software gewährleistet.
- Datenspeichervoll-Anzeige falls nur noch für einen kompletten Dateninhalt eines Tachographen Speicherplatz vorhanden ist.
- Keine Änderung der Dateninhalte möglich (reiner Transport).

Beim erfindungsgemäßen Informationsträger IT werden die Daten, welcher der Stick IT in seiner Masterfunktion einsammelt im Speicher SP so abgelegt, dass diese vor unberechtigten Zugriffen geschützt sind. Zum Auslesen wird der Informationsträger IT am Adapter zum Slave und kann durch ein Programm mit entsprechender Berechtigung ausgelesen und gelöscht werden. Mit dem gleichen Datentrarisferverfahren kann im Slave Mode auch die Betriebssoftware des Informationsträger IT geändert werden. Beispielsweise weist bei der Erst-Inbetriebnahme der Informationsträger IT je Eingabemittel/Taste T eine Funktion auf. Damit nun nach Maßgabe der Anzahl und/oder Zeitdauer von Betätigungen des Eingabemittels T damit quasi eine doppelte Anzahl von verschiedenartigen Steuerbefehlen zur Verfügung steht kann vom PC aus die Betriebssoftware des Informationsträger IT geändert/upgedatet werden. Somit wird beim Anschließen des Informationsträgers IT an das jeweilige Gerät im Dialogbetrieb zwischen den Steuereinrichtungen eine automatische Konfiguration des Informationsträgers/Schnittstelle mit den Verfahrensschritten Authentifikation, automatische Erkennung des Transfermoduses (Master/Slave) und der Datentransferrichtung und nach deren Maßgabe Wahl der entsprechenden Übertragungsart/ - geschwindigkeit/ -protokolls für das Herunterladen der Daten durchgerührt. Durch die Konfigurierbarkeit wird einerseits im Fehlerfall häufig eine rasche Fehlerbehebung ermöglicht, indem der Informationsträger IT in den Lade-Zustand gebracht wird, andererseits ist eine Vielzahl von Einsatzmöglichkeiten gegeben. Beispielsweise kann der Informationsträger IT beim Authentifizieren bei einem Computer (Aufstecken auf die USB-Schnittstelle und automatischer Verschlüsselung der Daten, so dass die benutzerseitige Eingabe eines Passworts entfallen kann) oder bei einem homebanking interface HBCI, beim Abholen der Daten von verschiedenen Registrierkassen (Gehen von Kasse zu Kasse) oder zur Inventur und nachfolgender zentraler Auswertung oder für Sicherheitspersonal in Verbindung mit elektronischen Stechuhren und zur Authentifizierung bei Zutrittskontrollsystemen eingesetzt werden.

In Weiterbildung der Erfindung kann das Einschieben einer Kontrollgerätekarte (Polizei) in den digitalen Fahrtenschreiber entfallen, indem die erforderlichen Daten und Funktionen im Programmspeicher PS enthalten sind; die Kommunikationsfunktionen bzw. Applikationen sind nicht fest vorgegeben, sondern sind auf Basis einer frei programmierbaren und auf Kommunikationsfunktionen optimierten Steuereinrichtung ST ausgebildet, so dass Erweiterungen oder Implementierungen komplett neuer Applikationen per Softwareupdate erfolgen können; die Sicherung der Daten auf Korrektheit kann nach dem Reed-Solomon-Verfahren (Einsatz bei Datenspeichern oder Datenübertragungen) erfolgen; u.a.

## Patentansprüche

1. Transportierbarer Informationsträger (IT) zum Datenaustausch zwischen elektrischen Geräten mit einer Steuereinrichtung und einem Speicher, welcher aufweist:
➢ nur eine einzige Schnittstellenschaltung (I), welche zum Anschluss an das jeweilige Gerät dient,
➢ einen Datenspeicher (SP) zur Zwischenspeicherung der vom jeweiligen Gerät zugeführten Daten,
➢ Eingabe- und Anzeigemittel (T, A) zur benutzergesteuerten Bedienung und Benutzerführung,
➢ und eine mit diesen verbundene Steuereinrichtung (ST) mit Programmspeicher (PS) zur Ausführung von Anwenderprogrammen und von Kommunikationsfunktionen, wobei die Steuereinrichtung (ST) mit einem Kommunikationsprozessor (K), einer Speicherverwaltung (SV) und einer Speicherzugriffskontrolle (SZ) verbunden ist oder diese aufweist, **dadurch gekennzeichnet,**
**dass** zur Konfiguration beim Anschließen des Informationsträgers (IT) an das jeweilige Gerät im Dialogbetrieb zwischen den Steuereinrichtungen (ST) eine Authentifikation, eine automatische Erkennung des Transfermoduses gemäß USB-OTG und der Datentransferrichtung und nach deren Maßgabe eine Wahl der entsprechenden Übertragungsart/ -geschwindigkeit/ -protokolls für das Herunterladen der Daten durchführt wird und dass nur nach erfolgreicher Authentifikation das Ein- und Auslesen sowie Löschen von Speicherbereichen des Datenspeichers (SP) ermöglicht wird.

2. Informationsträger nach Anspruch 1, **dadurch gekennzeichnet, dass** zur flexiblen Spannungsversorgung ein mit der Schnittstellenschaltung (I) verbundenes Netzteil (N) vorgesehen ist.

3. Informationsträger nach Anspruch 3, **dadurch gekennzeichnet, dass** die Kommunikationsfunktionen bzw. Applikationen nicht fest vorgegeben sind, sondern auf Basis einer frei programmierbaren und auf Kommunikationsfunktionen optimierten Steuereinrichturig (ST) ausgebildet sind.

4. Informationsträger nach Anspruch 1 zur Datenübernahme von einem digitalen Fahrtenschreiber, **dadurch gekennzeichnet, dass** der Informationsträger (IT) eine einzige, im wesentlichen rechteckige Leiterplatte mit angeformten Stiel aufweist, an dessen Ende ein Adapter für die gleiche Schnittstelle des digitalen Fahrtenschreibers angeordnet ist und dass die Anzeigemittel (A) beidseitig auf der Leiterplatte angeordnet sind, um eine gute Ablesbarkeit beim Einstecken in den digitalen Fahrtenschreiber zu ermöglichen.

5. Verfahren zum Datenaustausch zwischen elektrischen Geräten mit einer Steuereinrichtung und einem Speicher mittels eines transportierbaren Informationsträgers (IT), welcher nur eine einzige Schnittstellenschaltung (I), einen Datenspeicher (SP) zur Zwischenspeicherung der vom jeweiligen Gerät zugeführten Daten, Eingabe- und Anzeigemittel (T, A), eine Steuereinrichtung (ST) mit Programmspeicher (PS) zur Ausführung von Anwenderprogrammen und von Kommunikationsfunktionen, einen Kommunikationsprozessor (K), eine Speicherverwaltung (SV) und eine Speicherzugriffskontrolle (SZ) aufweist, bei dem eine automatische Konfiguration des Informationsträgers/Schnittstelle (IT, I) im Dialogbetrieb zwischen den Steuereinrichtungen (ST) erfolgt, indem:
➢ beim Anschließen des Informationsträgers (IT) an das jeweilige Gerät eine Authentifikation durchführt wird,
➢ ein automatische Erkennung des Transfermoduses gemäß USB-OTG und der Datentransferrichtung durchführt wird,
➢ eine Wahl der entsprechenden Übertragungsart/ -geschwindigkeit/ - protokolls für das Herunterladen der Daten durchführt wird und
➢ nur nach erfolgreicher Authentifikation das Ein- und Auslesen sowie Löschen von Speicherbereichen des Datenspeichers (SP) ermöglicht wird und
➢ in den Datenspeicher (SP) eingelesene Daten mit einer Kennung (Kennzeichen u. Datum) unverkennbar abgelegt werden und durch Betätigen der Eingabemittel (T) nur eine Auswahl von herunterladbaren Daten jedoch nicht ein Löschen der Daten ermöglicht wird.

6. Verfahren nach Anspruch 5, **dadurch gekennzeichnet, dass** der Kommunikationsprozessor (K) das Empfangen und Versenden der Daten über einen universellen asynchronen Send-/Empfangsbaustein unter Sicherung der Übertragung steuert, dabei eine Zwischenspeicherung der zu übertragenden Daten / übertragenen Daten und eine Signalisierung mittels Interrupt Request, wenn Daten verfügbar sind oder Daten erfolgreich gesendet wurden, durchführt, und Datenpakete mittels Direktzugriff selbstständig abholt und übertragt oder nach Empfang in den Datenspeicher (SP) ablegt.

7. Verfahren nach Anspruch 5, **dadurch gekennzeichnet, dass** die Anzeigemittel (A) als Leuchtdioden ausgestaltet sind und dass durch Leuchten und Blinken in unterschiedlichen Frequenzen eine Rückmeldung für den Anwender über die ausgewählten Funktionen, den Downloadstand sowie eine Fehlermeldung erfolgt.

8. Verfahren nach Anspruch 5, **dadurch gekennzeichnet, dass** zum Diebstahlschutz dem Informationsträger (IT) eine eindeutige Seriennummer fest zugeordnet ist und dass das Betriebsprogramm des Informationsträgers (IT) modular erweitert und ausgetauscht werden kann.

9. Verfahren nach Anspruch 5, **dadurch gekennzeichnet, dass** die Steuereinrichtung (ST) die Daten im Datenspeicher (SP) im Hammingcode mit einer Hamming-Distanz von ≥ 1 verarbeitet und auch die Verschlüsselung und Entschlüsselung der Daten durchführt und dass für die Datenübertragung ein robustes Datensicherungsverfahren, insbesondere ein CRC-Datensicherungsverfahren, benutzt wird.

10. Verfahren nach Anspruch 5, **dadurch gekennzeichnet, dass** die vom jeweiligen Gerät heruntergeladenen Daten blockweise im Datenspeicher (SP) abgespeichert werden und dass die Speicherverwaltung (SV) ein beabsichtigtes Überschreiben im Datenspeicher (SP) verhindert, den Benutzer vor nicht ausreichender Speicherkapazität warnt und im Falle des vollen Datenspeichers (SP) keine weitere Übernahme von Daten zulässt.

11. Verfahren nach Anspruch 5, **dadurch gekennzeichnet, dass** zur Ver- und Entschlüsselung der Daten ein starrer, ein dynamischer oder ein rollierender Schlüssel oder ein "verschlüsselter Container" benutzt wird, bei dem die Daten zu einer Data Unit gruppiert und mehrere Data Units zu einer Container Unit gruppiert werden und dass die Reichweite der Verschlüsselung sich auf Data Units oder ganze Container Units erstreckt.

12. Verfahren nach Anspruch 11, **dadurch gekennzeichnet, dass** die Sicherung der verbindungsorientierten, insbesondere der von der Datentransferrichtung abhängigen Übertragung von vorgegebenen/vorgebbaren Datenblöcken durch eine solche gezielte und modifizierte Wiederholung erfolgt, welche berücksichtigt, dass die Übertragungssicherheit der Datenblöcke auch von dem Inhalt der Daten abhängt, so dass für die zweite Wiederholung die Ver- und Entschlüsselung auf diejenigen Datenstrukturen optimiert werden kann, welche bei der ersten Ver- und Entschlüsselung nicht besonders gut abgeschnitten haben und so weiter.

13. Verfahren nach Anspruch 6, **dadurch gekennzeichnet, dass** der Kommunikationsprozessor (K) die Auswertung der transparent übertragenen Daten, insbesondere der Synchronisationsdaten, und die Parametrierung der Datenübertragung vornimmt.

14. Verfahren nach Anspruch 5, **dadurch gekennzeichnet, dass** Erweiterungen innerhalb der Kommunikationfunktionen oder der Applikationen oder die Implementierung komplett neuer Kommunikationsfunktionen oder Applikationen per Softwareupdate in der Steuereinrichtung (ST) erfolgen und dass die Option auf zwei oder mehr Kommunikationsschnittstellen oder Applikationen durch Laden der Software festlegbar ist und diese völlig flexibel kombinierbar sind, so dass ein protokollunabhängig eine hohe Verarbeitungs- und Übertragungsgeschwindigkeit und Durchlässigkeit in beide Richtungen erreicht wird.

15. Verfahren nach Anspruch 5, **dadurch gekennzeichnet, dass** die Speicherverwaltung (SV) bei der Datenübernahme von einem digitalen Fahrtenschreiber folgende Funktionen aufweist:
• die Daten werden im Datenspeicher (SP) entsprechend ihres Herkunftgeräts eindeutig abgelegt,
• die Auslesung ermöglicht gezielt diese Daten im Datenspeicher (SP) anzusprechen,
• die Speicherverwaltung (SV) verhindert unbeabsichtigtes Überschreiben während des IJbernahmebetriebs bei der Tachographenauslesung.
• die Speicherverwaltung (SV) warnt den Benutzer vor nicht ausreichender Speicherkapazität und lässt im Falle des vollen Datenspeichers (SP) keine weitere Übernahme zu.

## Claims

1. Portable data carrier (IT) for data exchange between electrical devices with a control unit and a memory, comprising:
➢ only a single interface circuit (I) to be connected to the respective device;
➢ a data memory (SP) for temporarily storing the data fed by the respective device;
➢ input and display means (T, A) for user-controlled operation and user guidance;
➢ and a control unit (ST) that is connected to the same and is provided with a program memory (PS) for executing application programs and communication functions, wherein said control unit (ST) is connected to or have a communication processor (K), a memory management (SV) and a memory access control (SZ),
**characterized in that**
for configuration by connection of said data carrier (IT) to said respective device in a dialogue mode between said control units (ST) an authentication process, an automatic recognition of the transfer mode according to USB-OTG and of the direction of the data transfer and according to that a selection of a adequate transmission type/speed/protocol for downloading the data is carried out and if said authentication process has been successful memory areas of said data memory (SP) can be read in and out and deleted.

2. Data carrier according to claim 1, wherein for the purpose of flexible power supply a power supply (N) is connected to said interface circuit (I).

3. Data carrier according to claim 2, wherein said communication functions and/or application programs are not fixed, but on the basis of a control unit (ST), which is freely programmable and optimized in terms of communication functions.

4. Data carrier according to claim 1 for data acceptance from a digital tachograph, wherein said data carrier (IT) comprises a single substantially rectangle printed circuit board having a formed stem with an adapter for the same interface of said digital tachograph at its end and wherein in order to ensure good readability when plugging into the digital tachograph said display means (A) are arranged at both sides of said printed circuit board

5. Method for data exchange between electrical devices with a control unit and a memory carried out by a portable data carrier (IT), comprising only a single interface circuit (I), a data memory (SP) for temporarily storing the data fed by the respective device, input and display means(T, A), and a control device (ST) provided with a program memory (PS) for executing application programs and communication functions, a communication processor (K), a memory management (SV) and a memory access control (SZ) wherein an automatic configuration of said data carrier/interface (IT) between said control devices (ST) in a dialogue mode is carried out, said method comprises following steps:
> an authentication process shall be carried out upon connection of said data carrier (IT) to the respective device;
> an automatic detection of a transfer mode according to USB-OTG and of the direction of the data transfer shall be carried out;
➢ a selection of the adequate transmission type/speed/protocol for downloading the data shall be carried out; and
➢ only once the authentication process has been successful memory areas of said data memory (SP) can be read in and out and deleted and
➢ in said data memory (SP) stored data are identified with an ID code (Registration and Date) and wherein by pressing said input means (T) only a selection of downloading data but not a deletion of said data is possible.

6. Method according to claim 5, wherein said communication processor (K) controls receiving and transmitting of data via an universal asynchronous receiver / transmitter module by confirming the transfer, thereby performing an intermediate storage of said data to be transmitted or transmitted and signaling interrupt request if data are available or had been successful transmitted and automatically fetches by direct memory access and transmits said data packets or after receipt thereof to be stored in said data memory (SP).

7. Method according to claim 5, wherein said display mean (A) is designed as LEDs, and wherein by flashing lights at different frequencies a feedback to the user is provided concerning selected functions, download status and an error message.

8. Method according to claim 5, wherein for anti-theft protection of said data carrier (IT) a unique serial number is assigned, and wherein an operating program of said data carrier (IT) can be modular expanded or exchanged.

9. Method according to claim 5, wherein said control unit (ST) processes the data stored in said data memory (SP) in Hamming-code at a distance of ≥ 1 and performs the data encryption and decryption, and wherein for data transfer a robust method for data security is used, in particular, a CRC method for data security.

10. Method according to claim 5, wherein data downloaded from the respective device are stored in data blocks in said data memory (SP) and wherein said memory management (SV) secures against unauthorized overwriting in the data memory (SP), warns the user in case of a insufficient memory capacity and in case of full data memory (SP) allows no further transfer of data.

11. Method according to claim 5, wherein for encryption and decryption of data a dynamic or a key or a rolling "encrypted container" is applied, whereby the data are grouped into a data unit and a number of grouped data units are grouped into a Container Unit, and wherein the range of encryption covers said data unit or said entire container units.

12. Method according to claim 11, wherein the security of the connection, in particular a transfer of data from the direction-dependent transmission of preset variable data blocks shall be performed via such targeted and modified repetition, while taking into account that the transfer of data and security of data blocks depends also on the data content thus, for a second repetition, the encryption and the decryption can be optimized to those data structures, which under the first encryption or decryption were not particularly successful, etc.

13. Method according to claim 6, wherein said communication processor (K) is engaged with analysis of transparent transmitted data, especially synchronization of data and with parameterization of data transmission.

14. Method according to claim 5, wherein to make enhancements within the communication functions, respectively the applications, or the addition of new communication features, respectively applications, via software updates in said communication processor (K) and wherein the option of two or more communication interfaces and applications can be determined by loading the software, while being accessible for fully compatible and flexible combination with it thus achieving, independently from the protocol, high processing and transmission speed, as well as permeability in both directions.

15. Method according to claim 5, wherein by transferring data from a digital tachograph said memory management (SV) has the following functions:
- recording the data in said data memory (SP) according to their source of origin;
- allowing of reading specifically defined data stored in said data storage (SP).
- preventing any accidental overwriting during the data receipt operation in the digital tachograph;
- warning the user of insufficient memory capacity for storage and in the case of full memory (SP) does not allows further data acceptance.

## Revendications

1. Support d'information portable (IT) pour un échange de données entre des appareils électriques avec un dispositif de commande et une mémoire, lequel possède :
➢ Un seul connecteur d'interface (I), lequel sert de connexion pour le dispositif respectif,
➢ Une mémoire de données (SP) pour la mémorisation intermédiaire des données reçue du dispositif respectif
➢ Dispositifs d'entrée et afficheurs (T, A) pour la commande et l'intervention par l'operateur
➢ Et une commande (ST) étant connectée aux ceux-ci avec une mémoire de programmes (PS) pour l'exécution des logiciels d'utilisateur et pour des fonctions de communication, où le dispositif de commande (ST) est connecté à un processeur de communication (K), une gestion de mémoire (SV) et une gestion des accès mémoire (SZ) ou ceux-ci sont intégrées.
**caractérisé en ce que** pour la configuration pendant la connexion du support d'information au dispositif respectif en mode interactif de dialogue entre les dispositifs de commande (ST) une authentification, une reconnaissance automatique du mode de transfert selon USB-OTG et la direction de transfert de données est effectuée en fonction du choix du protocole de mode de transmission correspondant et de vitesse de transmission pour le téléchargement des données et que seulement après l'authentification avec succès la mémorisation et la lecture de données ainsi que l'effacement de zone de mémoire (SP) sera possible.

2. Support d'information selon revendication 1, **caractérisé en ce que** pour une alimentation en électricité flexible un dispositif d'alimentation électrique (N) étant connecté à la connexion d'interface (I) est prévu.

3. Support d'information selon revendication 1, **caractérisé en ce que** les fonctions de communication respectivement les applications ne sont pas attribuées définitivement mais elles sont attribuées sur la base d'un dispositif de commande (ST) à programmer librement et avec des fonctions de communications optimisées.

4. Support d'information selon revendication 1 pour la réception de données d'un tachygraphe numérique, **caractérisé en ce que** le support d'information (IT) possède un seul circuit imprimé en général rectangulaire dont une partie de celui est le manche et à son bout se trouve un adaptateur pour la même interface du tachygraphe numérique et que les afficheurs (A) sont placés à chaque coté du circuit imprimé pour qu'on puisse facilement lire l'affichage en l'introduisant dans le tachygraphe numérique.

5. Procédé pour l'échange de données entre des appareils électriques avec un dispositif de commande et une mémoire à l'aide d'un support d'information portable (IT) lequel possède un seul connecteur d'interface (I) une mémoire de données (SP) pour la mémorisation intermédiaire des données venant du dispositif respectif, des dispositif d'entrée et des afficheurs (T, A), un dispositif de commande (ST) avec une mémoire de programmes (PS) pour l'exécution des programmes d'utilisateur et des fonctions de communication, un processeur de communication (K), une gestion de mémoire (SV) et une gestion des accès mémoire où une configuration automatique du support d'information/interface (IT, I) en dialogue interactif entre le dispositif de commande (ST) est effectuée, cependant:
➢ En connectant le support d'information (IT) au dispositif respectif une authentification est effectuée,
➢ Une reconnaissance automatique du mode de transfert selon USB-OTG et la direction du transfert de données est effectuée,
➢ Le choix du protocole du mode de transfert correspondant et de vitesse pour le téléchargement des données est effectué et
➢ Aprés une authentification avec succès la lecture, la mémorisation et l'effacement des zones de mémoire de données (SP) sont possible et
➢ Les données mémorisées dans la mémoire de données (SP) sont mémorisées avec un code d'identification (repère et date) pour ne pas être confondues et en actionnant le dispositif d'entrée (T) le choix de données téléchargées est possible mais pas l'effacement.

6. Procédé selon revendication 5 **caractérisé en ce que**, le processeur de communication (K) contrôle la réception et l'émission des données à l'aide d'un composant de réception et d'émission universel et asynchrone avec la protection de transmission, ou une mémorisation intermédiaire des données à transmettre/des données transmises et une signalisation à l'aide d'un Interrupt Request sont effectuées si des données sont disponibles ou des données sont transmises avec succès et des paquets de données sont téléchargés à l'aide d'accès direct et transmis ou après réception ils sont mémorisés dans la mémoire de données (SP).

7. Procédé selon revendication 5 **caractérisé en ce que** les afficheurs (A) sont des diodes lumineuses et qu'à l'aide de l'émission de lumière et de clignotement avec des différentes fréquences un signalement pour l'utilisateur concernant les fonctions choisisses, l'état de téléchargement ainsi qu'un message d'erreur sont effectués.

8. Procédé selon revendication 5 **caractérisé en ce que** pour la protection anti-vol le support d'informations (IT) obtient un numéro de série clair et que le programme d'exploitation du support d'informations (IT) peut être élargis en modules et changé.

9. Procédé selon revendication 5 **caractérisé en ce que** le dispositif de commande (ST) convertit les données dans la mémoire de données (SP) en code de HAMMING avec une distance de HAMMING de ≥ 1 et que le dispositif de commande (ST) réalise le codage et le décodage de données et qu'on utilise pour la transmission de données une méthode de sauvegarde de données robuste surtout une méthode de sauvegarde de données CRC.

10. Procédé selon revendication 5 **caractérisé en ce que** les données téléchargées d'un dispositif respectif sont mémorisées en forme de blocs dans la mémoire de données (SP) et que la gestion de mémoire (SV) empêche un échange et un effacement de données avec intension dans la mémoire de données (SP), l'utilisateur est avertis si la capacité de mémoire n'est pas suffisante et si la mémoire de données(SP) est complète elle n'accepte plus la mémorisation des données.

11. Procédé selon revendication 5 **caractérisé en ce qu'**on utilise pour le codage et le décodage des données une clef fix, dynamique ou rollante ou un "conteneur codé", où les données sont regroupées dans unité de données et plusieurs unités de données sont groupées en unités de conteneur et que le codage s'étend sur les unités de données ou sur des unités de conteneur entière.

12. Procédé selon revendication 11 **caractérisé en ce que** la protection de la transmission des blocs de données ordonnés/ordonnable par une répétition ponctuelle et modifiée avec une orientation vers la connexion, surtout dépendant de la direction du transfert de données est effectuée. Laquelle respecte, que la sécurité de transfert des blocs de données dépend aussi du contenu des données, en sorte que la deuxième répétition peut optimiser le codage et le décodage des structures de données dont lesquels le résultat n'était pas suffisant après le premier codage et décodage.

13. Procédé selon revendication 6 **caractérisé en ce que** le processeur de communication (K) réalise l'évaluation des données transmises transparentement, surtout des données de synchronisation et la spécification de paramètres de la transmission de données.

14. Procédé selon revendication 5 **caractérisé en ce que** des élargissements à l'intérieur des fonctions de communication ou des applications ou l'implémentation complète de nouvelles fonctions de communication ou des applications par téléchargement de logiciels sont effectué dans le dispositif de commande (ST) et que l'option sur deux ou plusieurs interfaces de communication ou des applications est fixée par téléchargement du logiciel et lesquelles peuvent être combinées librement de telle manière que indépendantement du protocole une vitesse élevée du traitement et de transmission et une perméabilité en les deux directions est obtenues.

15. Procédé selon revendication 11 **caractérisé en ce que** la gestion de mémoire (SV) à la réception de données d'un tachygraphe numérique possède les fonctions suivantes :
• les données sont mémorisées dans la mémoire de données d'une manière déterminée conformément à leur dispositif source.
• la lecture de données permet d'appeler bien orientée ces données dans la mémoire de données (SP).
• la gestion de mémoire(SV) empêche un échange et effacement de données sans intension pendant l'enregistrement des données du tachygraphe.
• la gestion de mémoire (SV) avertit l'utilisateur, si la capacité de mémoire n'est pas suffisante et empêche en cas où la mémoire de données (SP) est complète un chargement complémentaire.
